# EUROPÄISCHE PATENTSCHRIFT

(11) **EP 1 633 170 B1**
(45) Veröffentlichungstag und Bekanntmachung des Hinweises auf die Patenterteilung: **12.10.2011**
(21) Anmeldenummer: 05017123.0
(22) Anmeldetag: 05.08.2005
(51) Int. Cl.: H05B 41/288

(54) **Schaltungsanordnung zum Betreiben mindestens einer Hochdruckentladungslampe**
Circuit for operating at least one high-pressure discharge lamp
Circuit pour alimenter au moins une lampe à décharge haute-pression

(30) Priorität: 06.09.2004 DE 102004042996
(43) Veröffentlichungstag der Anmeldung: 08.03.2006
(73) Patentinhaber: Osram AG, 81543 München (DE)
(72) Erfinder: Rossmanith, Thomas Dr., 80634 München (DE)

(56) Entgegenhaltungen:
- DE-A1- 10 333 820
- US-A1- 2003 098 659
- US-A1- 2003 102 824
- US-B1- 6 744 649

## Beschreibung

### Technisches Gebiet

Die vorliegende Erfindung betrifft eine Schaltungsanordnung zum Betreiben mindestens einer Hochdruckentladungslampe mit vier Schaltern in Vollbrückenanordnung, wobei ein erster und ein zweiter Schalter den ersten Halbbrückenzweig bilden und ein dritter und ein vierter Schalter den zweiten Halbbrückenzweig, mindestens zwei Anschlüssen, um die Hochdruckentladungslampe zwischen den Mittelpunkt des ersten und des zweiten Halbbrückenzweigs zu koppeln, mindestens einem Anschluss zum Versorgen der Schaltungsanordnung mit einem Gleichspannungssignal und einer Ansteuerschaltung zum Ansteuern der vier Schalter, wobei die Ansteuerschaltung ausgelegt ist, ein erstes Ansteuersignal für die Schalter des ersten Halbbrückenzweigs und ein zweites Ansteuersignal für die Schalter des zweiten Halbbrückenzweigs bereitzustellen, derart, dass das erste und das zweite Ansteuersignal von einem Basissignal abgeleitet werden, dessen Takt zwischen einer ersten und einer zweiten Frequenz gesweept ist, und derart, dass das erste und das zweite Ansteuersignal eine Phasendifferenz aufweisen, die mit einer vorgebbaren dritten Frequenz moduliert ist.

### Stand der Technik

Eine derartige Schaltungsanordnung ist bekannt aus der DE 103 33 820 A1 derselben Anmelderin wie die vorliegende Anmeldung. Die dort vorgestellte Schaltungsanordnung zur Durchführung einer Phasenmodulation geht jedoch mit einem recht hohen Realisierungsaufwand einher, der sich in den Kosten niederschlägt.

Wie dem Fachmann daher bekannt, wird die Frequenz des Basissignals so gewählt, dass diese zwischen der ersten azimuthalen Resonanzmode und der ersten radialen akustischen Resonanzmode der Lampe liegt. Außerdem wird die dritte Frequenz so gewählt, dass diese in etwa der zweiten longitudinalen Resonanzfrequenz der Lampe entspricht.

Zum Stand der Technik wird weiterhin verwiesen auf die US 2003/0102824 A1, aus der eine Schaltungsanordnung zum hochfrequenten Betrieb - die Trägerfrequenz beträgt zwischen 400 und 600 kHz - einer Hochdruckentladungslampe bekannt ist. Wie dem Fachmann bekannt, braucht bei Betrieb einer Hochdruckentladungslampe mit einer Trägerfrequenz in diesem Frequenzbereich keine Maßnahme zur Bogenbegradigung getroffen werden. In der DE 103 33 820.9 dient das Sweepen der Trägerfrequenz der Bogenbegradigung. Zur Verhinderung einer Farbsegregation wird in der erwähnten US 2003/0102824 A1 mit einem niederfrequenten Signal in der Größenordnung zwischen 20 und 30 kHz zwischen zwei Träger-frequenzen hin- und hergeschaltet; welches der zweiten longitudinalen Resonanzfrequenz entspricht. Der in dieser Druckschrift verwendete Frequenzbereich für die Trägerfrequenz ist jedoch in der Praxis unerwünscht, da damit Abstrahlungsprobleme einhergehen. Ein Betrieb der in der erwähnten US-Druckschrift vorgeschlagenen Schaltungsanordnung mit Trägerfrequenzen im Bereich um 50 kHz wäre nicht realisierbar, da die benötigte Filtercharakteristik bei einer solch niedrigen Frequenz mit hohem Bauteilaufwand verbunden wäre. Durch das verwendete Filter und das Sweepen ist die Modulationsfrequenz fix an die Trägerfrequenz gekoppelt.

### Darstellung der Erfindung

Der vorliegenden Erfindung liegt deshalb die Aufgabe zugrunde, die aus der DE 103 33 820 A1 bekannte Schaltungsanordnung weiter zu verbessern.

Die Aufgabe wird gelöst durch eine Schaltungsanordnung mit den Merkmalen von Patentanspruch 1.

Der vorliegenden Erfindung liegt die Erkenntnis zugrunde, dass die obige Aufgabe in einfacher Weise dadurch gelöst werden kann, wenn die Ansteuerschaltung ausgelegt ist mittels eines Schalters zwischen Ableitungen des Basissignals mit unterschiedlicher Phasenverschiebung hin- und herzuschalten. Durch diese Maßnahme kann auf ein sinusförmiges Modulationssignal, welches in der DE 103 338 820.9 benötigt und daher in der Schaltungsanordnung erzeugt wurde, verzichtet werden. Der Amptitudenmodutationsgrad lässt sich in einfacher Weise durch die Größe der Phasenverschiebung verändern. Dadurch sind die Randbedingungen gegeben, dieses Prinzip in einfacher Weise mittels eines Mikrocontrollers ohne externe Beschaltung zu realisieren. Im Vergleich zur US 2003/0102824 A1 sind bei der vorliegenden Erfindung die Trägerfrequenz und die zur Modulation verwendete dritte Frequenz nicht miteinander gekoppelt, so dass die zusätzliche Maßnahme zur Bogenbegradigung, d. h. das Sweepen der Trägerfrequenz, in einfacher Weise in einer erfindungsgemäßen Schaltungsanordnung umgesetzt werden kann. Bei Vergleichen mit den bekannten Schaltungsanordnungen zeichnet sich die erfindungsgemäße Lösung durch eine Reduktion der Komplexität sowie einer Reduktion der Kosten der Realisierung aus.

Bevorzugt ist die Ansteuerschaltung ausgelegt, die jeweils zwei Schalter eines Halbbrückenzweigs mit komplementären Signalen anzusteuern.

Eine Kategorie von Ausführungsformen zeichnet sich dadurch aus, dass die Ansteuerschaltung einen Schalter aufweist, der ausgelegt ist, zur Ableitung des zweiten Ansteuersignals aus dem Basissignal zwischen zwei Repräsentationen des Basissignals mit unterschiedlicher Phasenlage im Takt der dritten Frequenz hin- und hcrzuschalten. Das erste Ansteuersignal weist dann gegenüber dem Basissignal eine feste Phasenverschiebung auf, im einfachsten Fall eine Phasenverschiebung von 0°. Dies stellt die Realisierungsmöglichkeit mit dem geringsten Aufwand dar.

Es ist weiterhin bevorzugt, das erste Ansteuersignal gegenüber dem Basissignal zu invertieren. Dadurch kann der Arbeitspunkt gewählt werden, d.h. wird das erste Ansteuersignal invertiert, sinkt mit steigender Phasenverschiebung die Leistungsaufnahme der Lampe. Umgekehrt steigt bei nicht invertiertem ersten Ansteuersignal mit steigender Phasenverschiebung die Leistungsaufnahme der Lampe.

Die Phasenverschiebung zwischen dem Basissignal und dem Ansteuersignal kann zur Leistungseinstellung verwendet werden.

Eine zweite Kategorie von Ausführungsformen zeichnet sich dadurch aus, dass die Ansteuerschaltung zwei Schalter aufweist, wobei der erste Schalter ausgelegt ist, zur Ableitung des ersten Ansteuersignals aus dem Basissignal zwischen zwei Repräsentationen des Basissignals mit unterschiedlicher Phasenlage im Takt der dritten Frequenz hin- und herzuschalten, und wobei der zweite Schalter ausgelegt ist, zur Ableitung des zweiten Ansteuersignals aus dem Basissignal zwischen zwei Repräsentationen des Basissignals mit unterschiedlicher Phasenlage im Takt der dritten Frequenz hin- und herzuschalten. Durch die relative Phasenlage der Repräsentationen des Basissignals, zwischen denen jeweils hin- und hergeschaltet wird, lässt sich hier die Leistungseinstellung vornehmen.

Weiterhin ist bevorzugt, dass die Phasenverschiebung zwischen dem ersten und dem zweiten Ansteuersignal dual alternierend erfolgt, wobei, wie erwähnt, die Basisphasenverschiebung zur Leistungseinstellung vorgebbar ist.

Die Sweepfrequenz liegt bevorzugt zwischen 50 Hz und 500 Hz, vorzugsweise zwischen 80 Hz und 200 Hz. Die Frequenz des Basissignals liegt bevorzugt unter 150 kHz, vorzugsweise zwischen 35 und 70 kHz oder zwischen 80 und 120 kHz. Es ist weiterhin bevorzugt, die Frequenz des Basissignals zwischen im Wesentlichen 40 kHz +/- 10 % und 60 kHz +/- 10 % zu sweepen. Die dritte Frequenz liegt bevorzugt unter 50 kHz, vorzugsweise zwischen 20 und 35 kHz.

Die Ansteuerschaltung kann sowohl in Hardware als auch in Software sowie in Kombinationen von Hardware und Software realisiert werden.

Weitere bevorzugte Ausführungsformen ergeben sich aus den Unteransprüchen.

### Kurze Beschreibung der Zeichnungen

Im Nachfolgenden wird nunmehr ein Ausführungsbeispiel unter Bezugnahme auf die beigefügten Zeichnungen näher beschrieben. Es zeigen:
- Figur 1: in schematischer Darstellung einen ersten Teil einer erfindungsgemäßen Schaltungsanordnung;
- Figur 2: in schematischer Darstellung einen zweiten Teil einer erfindungsgemäßen Schaltungsanordnung;
- Figur 3: in schematischer Darstellung den zeitlichen Verlauf verschiedener Signale; und
- Figur 4: den an einem Ausführungsbeispiel einer erfindungsgemäßen Schaltungsanordnung gemessenen zeitlichen Verlauf der Lampenspannung sowie das Amplitudenspektrum der Lampenspannung.

### Bevorzugte Ausführung der Erfindung

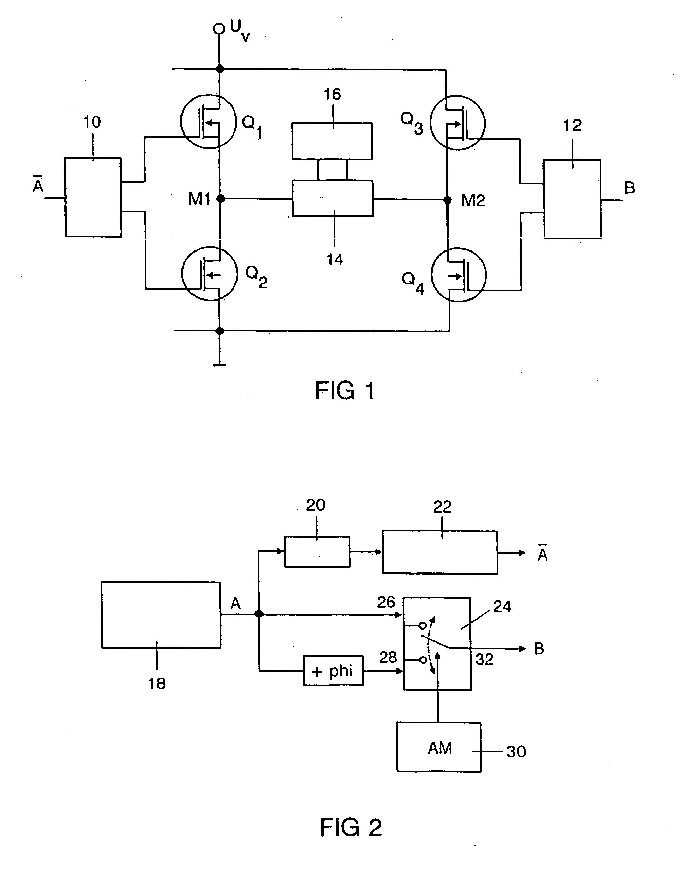

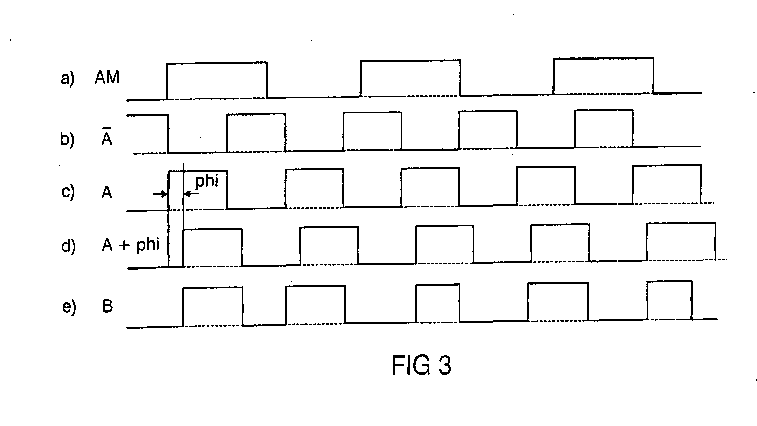

Figur 1 zeigt einen ersten Teil einer erfindungsgemäßen Schaltungsanordnung. Dabei werden vier Schalter Q₁ bis Q₄ in Vollbrückenanordnung über jeweilige Treiberschaltungen 10, 12 angesteuert. Die am Ausgang der jeweiligen Treiberschaltung 10, 12 bereitgestellten Signale sind zueinander komplementär. Zwischen die Mittelpunkte M1, M2 der beiden Halbbrückenzweige ist ein LC-Kreis 14 gekoppelt, an den eine Hochdruckentladungslampe 16 angeschlossen ist. Die Schaltungsanordnung wird mit einem Gleichspannungssignal Uᵥ, beispielsweise 400 V DC, versorgt. Die Treiberschaltung 10 wird mit einem Signal A̅, die Treiberschaltung 12 mit einem Signal B angesteuert, auf deren Erzeugung und zeitlichen Verlauf mit Bezug auf die Figuren 2 und 3 noch näher eingegangen wird.

Gemäß Figur 2 wird zur Erzeugung der Signale A̅und B zunächst über eine Oszillatorvorrichtung 18 ein zwischen 40 kHz und 60 kHz gesweeptes Rechtecksignal A bereitgestellt, deren zeitlicher Verlauf in Figur 3 als Kurvenzug c) zu sehen ist. Dieses durchläuft einen Inverter 20 und eine Einheit 22 zur Leistungseinstellung durch Variation der Phasenverschiebung gegenüber dem Signal A. Am Ausgang der Einheit 22 wird das Signal A̅A bereitgestellt. Das Signal A wird überdies an einen ersten Eingang 26 einer Schaltvorrichtung 24 und an einen zweiten Eingang 28 der Schaltvorrichtung 24 als Signal A+phi in einer um den Winkel + phi verschobenen Variante angelegt. Über eine Vorrichtung 30 wird ein Hin- und Herschalten zwischen den Eingängen 26 und 28 der Schaltvorrichtung 24 im Takt einer Frequenz f_{AM} bewirkt, die zwischen 20 und 35 kHz liegt. Entsprechend wird am Ausgang 32 abwechselnd das am Eingang 26 bzw. das am Eingang 28 anliegende Signal als Signal B bereitgestellt.

In Figur 3 ist zunächst, wie erwähnt, als Kurvenzug c) der zeitliche Verlauf des Signals A zu erkennen. Der Kurvenzug b) zeigt den hierzu invertierten Verlauf, nämlich das Signal A̅ Kurvenzug d) zeigt den Verlauf des Signals A+phi, welches um + phi gegenüber dem Signal A verschoben ist. Der Kurvenzug a) zeigt den Verlauf des Schaltsignals AM, welcher bestimmt, zu welchen Zeitpunkten das Signal A und zu welchen Zeitpunkten das Signal A + phi an den Ausgang der Schaltvorrichtung 24 geleitet wird und dort als Signal B bereitgestellt wird. Der zeitliche Verlauf des Signals B ist als Kurvenzug e) dargestellt.

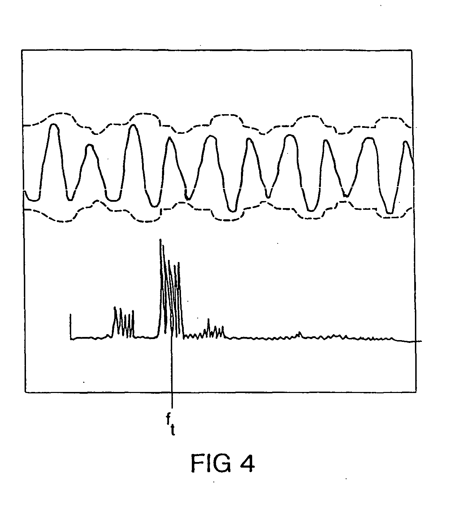

Figur 4 zeigt oben den zeitlichen Verlauf der der Lampe 16 zugefühnen Lampenspannung. Gut zu erkennen ist die Hüllkurve, in der sich die Schaltfrequenz f_{AM} wiederspiegelt. Darunter ist das Amplitudenspektrum zu erkennen, welches die Frequenz fₜ des Signals A wiederspiegelt. Im Abstand +/- f_{AM} von fₜ sind die Seitenbänder angeordnet.

## Patentansprüche

1. Schaltungsanordnung zum Betreiben mindestens einer Hochdruckentladungslampe (16) mit:
- vier Schaltern (Q₁ bis Q₄) in Vollbrückenanordnung, wobei ein erster und ein zweiter Schalter (Q₁, Q₂) den ersten Halbbrückenzweig bilden und ein dritter und ein vierter Schalter (Q₃, Q₄) den zweiten Halbbrückenzweig,
- mindestens zwei Anschlüssen, um die Hochdruckentladungslampe zwischen den Mittelpunkt (M1, M2) des ersten und des zweiten Halbbrückenzweigs zu koppeln,
- mindestens einem Anschluss zum Versorgen der Schaltungsanordnung mit einem Gleichspannungssignal (Uᵥ); und
- einer Ansteuerschaltung zum Ansteuern der vier Schalter, wobei die Ansteuerschaltung ausgelegt ist, ein erstes Ansteuersignal (A̅) für die Schalter (Q₁, Q₂) des ersten Halbbrückenzweigs und ein zweites Ansteuersignal (B) für die Schalter (Q₃, Q₄) des zweiten Halbbrückenzweigs bereitzustellen, derart, dass das erste und das zweite Ansteuersignal (A̅, B) von einem Basissignal (A) abgeleitet werden, dessen Takt zwischen einer ersten und einer zweiten Frequenz gesweept ist, und
derart, dass das erste und das zweite Ansteuersignal (A̅, B) eine Phasendifferenz aufweisen, die mit einer vorgebbaren dritten Frequenz (f_{AM}) moduliert ist,
**dadurch gekennzeichnet,**
**dass** die Ansteuerschaltung zur Modulation der Phasendifferenz mindestens eine Schaltvorrichtung (24) umfasst, wobei die Ansteuerschaltung ferner eine Oszillatorvorrichtung (18) aufweist, die das Basissignal (A) zum Anlegen an einen ersten Eingang (26) der Schaltvorrichtung (24) und an einen zweiten Eingang (28) der Schaltvorrichtung (24) als phasenverschobenes Signal (A+phi) erzeugt, wobei die Schaltvorrichtung (24) einen Ausgang (32) aufweist und ein Hin- und Herschalten des am Ausgang (32) anliegenden Signals zwischen dem ersten Eingang (26) und zwischen dem zweiten Eingang (28) der Schaltvorrichtung (24) im Takt der dritten Frequenz (f_{AM}) bewirkt, und das am Ausgang (32) anliegende Signal als zweites Ansteuersignal (B) bereitstellt.

2. Schaltungsanordnung nach Anspruch 1,
**dadurch gekennzeichnet,**
**dass** die Ansteuerschaltung ausgelegt ist, die jeweils zwei Schalter (Q₁, Q₂; Q₃, Q₄) eines Halbbrückenzweigs mit komplementären Signalen anzusteuern.

3. Schaltungsanordnung nach einem der vorhergehenden Ansprüche,
**dadurch gekennzeichnet,**
**dass** das erste Ansteuersignal (A̅) gegenüber dem Basissignal eine feste Phasenverschiebung aufweist.

4. Schaltungsanordnung nach Anspruch 3,
**dadurch gekennzeichnet,**
**dass** das erste Ansteuersignal (A̅) gegenüber dem Basissignal invertiert ist.

5. Schaltungsanordnung nach Anspruch 3 oder 4,
**dadurch gekennzeichnet,**
**dass** die Phasenverschiebung zwischen Basissignal und erstem Ansteuersignal (A̅) zur Leistungseinstellung (22) vorgebbar ist.

6. Schaltungsanordnung nach einem der Ansprüche 1 oder 2,
**dadurch gekennzeichnet,**
**dass** die Ansteuerschaltung zwei Schaltvorrichtungen aufweist, wobei die erste Schaltvorrichtung (24) ausgelegt ist, zur Ableitung des zweiten Ansteuersignals (A̅) aus dem Basissignal zwischen zwei Repräsentationen des Basissignals mit unterschiedlicher Phasenlage im Takt der dritten Frequenz (f_{AM}) hin- und herzuschalten, und wobei eine zweite Schaltvorrichtung ausgelegt ist, zur Ableitung des zweiten Ansteuersignals (B) aus dem Basissignal zwischen zwei Repräsentationen des Basissignals mit unterschiedlicher Phasenlage im Takt der dritten Frequenz (f_{AM}) hin- und herzuschalten.

7. Schaltungsanordnung nach einem Anspruch 6,
**dadurch gekennzeichnet,**
**dass** die Phasenverschiebung zwischen dem ersten (Ä) und dem zweiten (B) Ansteuersignal dual alternierend erfolgt, wobei die Basisphasenverschiebung zur Leistungseinstellung vorgebbar ist.

8. Schaltungsanordnung nach einem der vorhergehenden Ansprüche,
**dadurch gekennzeichnet,**
**dass** die Sweepfrequenz (f_{S}) zwischen 50 Hz und 500 Hz liegt, vorzugsweise zwischen 80 Hz und 200 Hz.

9. Schaltungsanordnung nach einem der vorhergehenden Ansprüche,
**dadurch gekennzeichnet,**
**dass** die Frequenz (fₜ) des Basissignals (A) unter 150 kHz liegt, vorzugsweise zwischen 35 und 70 kHz oder zwischen 80 und 120 kHz.

10. Schaltungsanordnung nach Anspruch 10,
**dadurch gekennzeichnet,**
**dass** die Ansteuerschaltung ausgelegt ist, die Frequenz (fₜ) des Basissignals (A) zwischen im Wesentlichen 40 kHz +/- 10% und 60 kHz +/- 10% zu sweepen.

11. Schaltungsanordnung nach einem der vorhergehenden Ansprüche,
**dadurch gekennzeichnet,**
**dass** die dritten Frequenz (f_{AM}) unter 50 kHz, vorzugsweise zwischen 20 und 35 kHz, liegt.

12. Schaltungsanordnung nach einem der vorhergehenden Ansprüche,
**dadurch gekennzeichnet,**
**dass** die Ansteuerschaltung in Hardware und/oder Software realisiert ist.

## Claims

1. Circuit arrangement for operating at least one highpressure discharge lamp (16) having:
- four switches (Q₁ to Q₄) in a full bridge arrangement, a first and a second switch (Q₁, Q₂) forming the first half-bridge arm, and a third and a fourth switch (Q₃, Q₄) forming the second half-bridge arm,
- at least two terminals for coupling the high pressure discharge lamp between the midpoint (M1, M2) of the first and of the second half-bridge arms,
- at least one terminal for supplying the circuit arrangement with a DC voltage signal (Uᵥ); and
- a drive circuit for driving the four switches, the drive circuit being designed to provide a first drive signal (A̅) for the switches (Q₁, Q₂) of the first half-bridge arm and a second drive signal (B) for the switches (Q₃, Q₄) of the second half-bridge arm in such a way that the first and the second drive signals (A̅, B) are derived from a base signal (A) whose clock pulse is swept between a first and a second frequency, and
in such a way that the first and the second drive signals (A̅, B) have a phase difference which is modulated with a prescribeable third frequency (f_{AM}),
**characterized in that** in order to modulate the phase difference the drive circuit comprises at least one switching device (24), the drive circuit further having an oscillator device (18) which generates the base signal (A) in order to apply it as phase-shifted signal (A + phi) to a first input (26) of the switching device (24) and to a second input (28) of the switching device (24), the switching device (24) having an output (32) and switching the signal present at the output (32) to and fro between the first input (26) and the second input (28) of the switching device (24) in time with the third frequency (f_{AM}), and providing the signal present at the output (32) as second drive signal (B).

2. Circuit arrangement according to Claim 1, **characterized in that** the drive circuit is designed to drive the in each case two switches (Q₁, Q₂; Q₃, Q₄) of a half-bridge arm with complementary signals.

3. Circuit arrangement according to one of the preceding claims, **characterized in that** the first drive signal (A̅) exhibits a fixed phase shift by comparison with the base signal.

4. Circuit arrangement according to Claim 3, **characterized in that** the first drive signal (A̅) is inverted in relation to the base signal.

5. Circuit arrangement according to Claim 3 or 4, **characterized in that** the phase shift between the base signal and the first drive signal (A̅) can be prescribed for the purpose of power setting.

6. Circuit arrangement according to one of Claims 1 or 2, **characterized in that** the drive circuit has two switching devices, the first switching device (24) being designed to switch to and fro between two representations of the base signal with a different phase angle in time with the third frequency (f_{AM}) in order to derive the first drive signal (A̅) from the base signal, and a second switching device being designed to switch to and fro between two representations of the base signal with a different phase angle in time with the third frequency (f_{AM}) in order to derive the second drive signal (B) from the base signal.

7. Circuit arrangement according to Claim 6, **characterized in that** the phase shift between the first (A̅) and the second (B) drive signals is performed in a dual alternating fashion, the base phase shift being prescribeable for the purpose of power setting.

8. Circuit arrangement according to one of the preceding claims, **characterized in that** the sweep frequency (fₛ) is between 50 Hz and 500 Hz, preferably between 80 Hz and 200 Hz.

9. Circuit arrangement according to one of the preceding claims, **characterized in that** the frequency (f₁) of the base signal (A) is below 150 kHz, preferably between 35 and 70 kHz or between 80 and 120 kHz.

10. Circuit arrangement according to Claim 9, **characterized in that** the drive circuit is designed to sweep the frequency (f₁) of the base signal (A) between substantially 40 kHz +/- 10% and 60 kHz +/- 10%.

11. Circuit arrangement according to one of the preceding claims, **characterized in that** the third frequency (f_{AM}) is below 50 kHz, preferably between 20 and 35 kHz.

12. Circuit arrangement according to one of the preceding claims, **characterized in that** the drive circuit is implemented by means of hardware and/or software.

## Revendications

1. Agencement de circuit pour faire fonctionner au moins une lampe à décharge haute pression (16), comprenant :
- quatre commutateurs (Q₁ à Q₄) montés en pont complet, un premier et un deuxième commutateur (Q₁, Q₂) formant la première branche de demi-pont et un troisième et un quatrième commutateur (Q₃, Q₄) formant la deuxième branche de demi-pont,
- au moins deux bornes pour coupler la lampe à décharge haute pression entre le centre (M1, M2) de la première et de la deuxième branche de demi-pont,
- au moins une borne pour alimenter l'agencement de circuit avec un signal de tension continue (Uᵥ) ; et
- un circuit de commande pour commander les quatre commutateurs, le circuit de commande étant conçu pour fournir un premier signal de commande (A̅) pour les commutateurs (Q₁, Q₂) de la première branche de demi-pont et un deuxième signal de commande (B) pour les commutateurs (Q₃, Q₄) de la deuxième branche de demi-pont, de telle sorte que le premier et le deuxième signal de commande (A̅, B) soient dérivés d'un signal de base (A) dont le rythme est balayé entre une première et une deuxième fréquence, et
de telle sorte que le premier et le deuxième signal de commande (A̅, B) présentent une différence de phase qui est modulée avec une troisième fréquence (f_{AM}) pouvant être prédéfinie,
**caractérisé**
**en ce que** le circuit de commande pour moduler la différence de phase comprend au moins un dispositif de commutation (24), le circuit de commande comportant en outre un dispositif oscillateur (18), qui génère le signal de base (A) destiné à être appliqué à une première entrée (26) du dispositif de commutation (24) et à une deuxième entrée (28) du dispositif de commutation (24) sous forme de signal déphasé (A+phi), le dispositif de commutation (24) comportant une sortie (32) et effectuant une commutation alternée du signal appliqué à la sortie (32) entre la première entrée (26) et entre la deuxième entrée (28) du dispositif de commutation (24) au rythme de la troisième fréquence (f_{AM}), et fournissant le signal appliqué à la sortie (32) sous forme de deuxième signal de commande (B).

2. Agencement de circuit selon la revendication 1,
**caractérisé**
**en ce que** le circuit de commande est conçu pour commander les deux commutateurs (Q₁, Q₂ ; Q₃, Q₄) de chaque branche de demi-pont à l'aide de signaux complémentaires.

3. Agencement de circuit selon l'une des revendications précédentes,
**caractérisé**
**en ce que** le premier signal de commande (A̅) présente par rapport au signal de base un déphasage fixe.

4. Agencement de circuit selon la revendication 3,
**caractérisé**
**en ce que** le premier signal de commande (A̅) est inversé par rapport au signal de base.

5. Agencement de circuit selon la revendication 3 ou 4,
**caractérisé**
**en ce que** le déphasage entre signal de base et premier signal de commande (A̅) peut être prédéfini pour le réglage de puissance (22).

6. Agencement de circuit selon l'une des revendications 1 ou 2,
**caractérisé**
**en ce que** le circuit de commande comporte deux dispositifs de commande, le premier dispositif de commande (24) étant conçu , afin de dériver le deuxième signal de commande (A̅) du signal de base, pour commuter en alternance au rythme de la troisième fréquence (f_{AM}) entre deux représentations du signal de base à position de phase différente, et un deuxième dispositif de commande étant conçu, afin de dériver le deuxième signal de commande (B) du signal de base, pour commuter en alternance au rythme de la troisième fréquence (f_{AM}) entre deux représentations du signal de base à position de phase différente.

7. Agencement de circuit selon la revendication 6,
**caractérisé**
**en ce que** le déphasage entre le premier (A̅) et le deuxième signal de commande (B) s'effectue en double alternance, le déphasage de base pouvant être prédéfini pour le réglage de puissance.

8. Agencement de circuit selon l'une des revendications précédentes,
**caractérisé**
**en ce que** la fréquence de balayage (fₛ) est comprise entre 50 Hz et 500 Hz, de préférence entre 80 Hz et 200 Hz.

9. Agencement de circuit selon l'une des revendications précédentes,
**caractérisé**
**en ce que** la fréquence (fₜ) du signal de base (A) est inférieure à 150 kHz, de préférence comprise entre 35 et 70 kHz ou entre 80 et 120 kHz.

10. Agencement de circuit selon la revendication 10,
**caractérisé**
**en ce que** le circuit de commande est conçu pour balayer la fréquence (fₜ) du signal de base (A) entre essentiellement 40 kHz +/- 10% et 60 kHz +/- 10%.

11. Agencement de circuit selon l'une des revendications précédentes,
**caractérisé**
**en ce que** la troisième fréquence (f_{AM}) est inférieure à 50 kHz, de préférence comprise entre 20 et 35 kHz.

12. Agencement de circuit selon l'une des revendications précédentes,
**caractérisé**
**en ce que** le circuit de commande est réalisé en hardware et/ou software.
